Europäisches Patentamt

European Patent Office

Office européen des brevets

(19)

(11)  **EP 1 020 617 A1**

## (12) EUROPEAN PATENT APPLICATION

(43) Date of publication:
**19.07.2000 Bulletin 2000/29**

(51) Int. Cl.⁷: **E21D 9/06**, **E21D 9/08**

(21) Application number: **00100748.3**

(22) Date of filing: **14.01.2000**

(84) Designated Contracting States:
**DE FR GB**
Designated Extension States:
**AL LT LV MK RO SI**

(30) Priority: **14.01.1999 JP 719199**

(71) Applicant:
**SHI Control Systems, Ltd.**
**Chiba (JP)**

(72) Inventor: **Manabe, Kiyoshi**
**Yachimata-shi, Chiba (JP)**

(74) Representative:
**Geyer, Ulrich F., Dr. Dipl.-Phys. et al**
**WAGNER & GEYER,**
**Patentanwälte,**
**Gewürzmühlstrasse 5**
**80538 München (DE)**

(54)   **Control apparatus for synchronous rotation of cutter heads, for a multiple shield excavator**

(57)     A multiple shield excavator includes a plurality of universal motors for driving rotating cutters. A cutter synchronous control apparatus comprises a plurality of universal inverters for controlling driving of the universal motors in accordance with a speed command value. The cutter synchronous control apparatus further comprises a deviation detecting unit for detecting an angle deviation between the adjacent rotating cutters, and a compensating unit for giving the angle deviation, as a speed command compensating value, to the speed command values given to the universal inverters for the rotating cutters.

FIG. 1

## Description

BACKGROUND OF THE INVENTION

1. Field of the Invention

The present invention relates to a cutter synchronous control apparatus for a multiple shield machine or excavator.

Multiple shield excavators have been proposed as excavating machines for building tunnels. A multiple shield excavator includes a plurality of rotating cutters. The plurality of rotating cutters are arranged substantially in the same plane such that excavation areas of adjacent rotating cutters partly overlap with each other. Then, the rotating cutters are each driven by a plurality of motors. In such a multiple shield excavator, the plurality of rotating cutters must be operated under synchronous control to prevent collision between spokes of the adjacent rotating cutters.

As one example of apparatuses for carrying out the synchronous operation control, Japanese Patent No. 2562494 discloses a cutter synchronous operating apparatus for a multiple shield excavator. The disclosed cutter synchronous operating apparatus includes a plurality of rotating cutters. The plurality of rotating cutters are arranged substantially in the same plane such that the center-to-center distance of adjacent rotating cutters is larger than the excavation radia of the rotating cutters, but smaller than the diameters thereof. The rotating cutters are each independently driven by a plurality of driving units comprising motors and speed reducers. One of the plural rotating cutters serves as a main rotating cutter, and the remaining rotating cutters serve as subsidiary rotating cutters. One of the plural motors driving each rotating cutter serves as a parent motor, and the remaining motors serve as child motors.

A speed controller is provided for the parent motor driving the main rotating cutter. The speed controller regulates supply power so that the difference between a given set speed value and a detected speed value becomes zero. Also, a speed controller is provided for the parent motor driving the subsidiary rotating cutter. The speed controller regulates supply power so that the difference between a given set speed value and a detected speed value becomes zero, and that a detected deviation value between the main rotating cutter and the subsidiary rotating cutter becomes zero. The term "detected deviation value" means a difference between an angle value detected for the main rotating cutter and an angle value detected for the subsidiary rotating cutter.

A torque controller is provided for the child motor driving the main rotating cutter. The torque controller regulates supply power in accordance with a torque command based on a detected current value from the parent motor so that the child motor generates torque equal to the torque generated by the parent motor. This is also applied to the subsidiary rotating cutter.

In the above-described cutter synchronous operating apparatus, a vector inverter is used as the speed controller and a dedicated vector motor is used as the motor. Of the plural motors provided for each rotating cutter, the parent motor is subjected to speed control and the child motor is subjected to torque control. Precise speed computation and torque computation are required in those speed control and torque control. In addition, at least one motor requires to be a dedicated vector motor including a speed sensor (encoder). The dedicated vector motor has a lamer outer configuration and requires more wiring than a universal motor. This is because of the necessity of wiring for an encoder, a thermistor, etc. Therefore, the dedicated vector motor is of inferior ruggedness. The term "universal motor" means here an induction motor including no speed sensor.

The above-described synchronous operation control requires speed control and torque control for the same rotating cutter, and also requires synchronous rotation control between the rotating cutters. Accordingly, the synchronous operation control is complicated and the size of a control panel tends to increase. Further, a conventional control system is complicated and is apt to run out of specification in performance.

On the other hand, another multiple shield excavator has been proposed for the purpose of simplifying a control system. In this multiple shield excavator, one of plural rotating cutters is driven by universal motors without inverters. The remaining rotating cutters are driven by dedicated vector motors and dedicated vector Inverters. This type of multiple shield excavator is disclosed in, e.g., Japanese Unexamined Patent Publication No. 9-324597. In the disclosed multiple shield excavator, control is performed such that the number of revolutions of the vector motor under vector inverter control matches with the number of revolutions of the universal motor.

Such a multiple shield excavator however also requires dedicated vector motors and dedicated vector inverters for the rotating cutters other than one rotating cutter. Accordingly, a limitation exists in simplifying a control system.

SUMMARY OF THE INVENTION

An object of the present Invention is therefore to provide a cutter synchronous control apparatus for a multiple shield excavator in which a plurality of rotating cutters can be all operated under synchronous control with a simple system using universal inverters and universal motors.

A multiple shield excavator according to the present invention comprises a plurality of rotating cutters. The plurality of rotating cutters are arranged in the same plane such that excavation areas of adjacent rotating cutters partly overlap with each other. Each of the rotating cutters is driven by a plurality of motors.

According to one aspect of the present invention, the multiple shield excavator includes universal motors as the plurality of motors. The cutter synchronous control apparatus comprises at least one universal inverter provided for each of the rotating cutters and controlling driving of the plurality of universal motors in accordance with a speed command value. The cutter synchronous control apparatus further comprises a deviation detecting unit for detecting an angle deviation between the adjacent rotating cutters. The cutter synchronous control apparatus further comprises a compensating unit for giving the angle deviation, as a speed command compensating value, to the speed command value given to the at least one universal inverter for each rotating cutter.

BRIEF DESCRIPTION OF THE DRAWINGS

Fig. 1 is a diagram showing the construction of a rotating cutter synchronous control apparatus according to a first embodiment of the present invention;
Fig. 2 is a characteristic graph for explaining a difference in output torque due to a difference in input frequency of two motors;
Fig. 3 is a characteristic graph for explaining a drooping control characteristic employed in the present invention;
Fig. 4 is a graph for explaining examples of an A/D conversion error and an error due to acceleration/deceleration time lag and a scan time lag in a universal inverter; and
Fig. 5 is a diagram showing the construction of a rotating cutter synchronous control apparatus according to a second embodiment of the present invention.

DESCRIPTION OF THE PREFERRED EMBODIMENTS

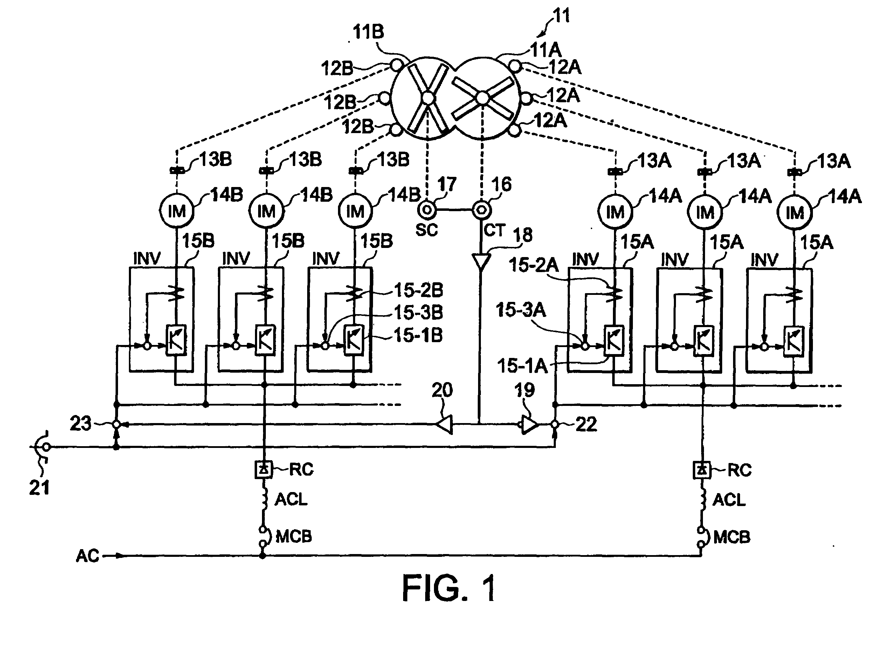

A rotating cutter synchronous control apparatus according to a first embodiment of the present invention will be described with reference to Fig. 1. A description of this embodiment is made in connection with a shield machine or excavator wherein a cutter head 11 comprises a double rotating cutters 11A, 11B having respective shafts R, L, and the rotating cutters 11A, 11B are each driven by three motors. The rotating cutters 11A, 11B are arranged substantially in the same plane such that excavation areas of the rotating cutters partly overlap with each other. In other words, the center-to-center distance of the rotating cutters 11A, 11B is larger than the excavation radia of the rotating cutters 11A, 11B, but smaller than the diameters thereof.

Looking at the side of the rotating cutter 11A, output shafts of three universal motors 14A are coupled to pinions 12A through speed reducers 13A, respectively. Because the three pinions 12A are coupled to the rotating cutter 11A, the three universal motors 14A rotate at the same speed. The three universal motors 14A are driven and controlled respectively by universal inverters 15A provided in one-to-one relation. Here, each universal motor 14A is a three-phase induction motor which requires no speed sensor. Each universal inverter 15A is a three-phase inverter capble of controlling the universal motor 14A which requires no speed sensor. Such a universal inverter 15A can perform, e.g., sensorless vector control. In this embodiment, particularly, the universal inverter 15A comprises an inverter having a drooping control function described later. Each universal inverter 15A receives a speed command value given from a speed setting unit 21. Also, each universal inverter 15A is supplied with rectified power from an alternating current power supply AC through an electromagnetic circuit breaker MCB, an alternating current reactor ACL, and a rectifying circuit RC. The side of the rotating cutter 11B has exactly the same construction as described above. For the sake of convenience, the rotating cutter synchronous control apparatus of this embodiment is shown in Fig. 1 with wiring only for one phase. Similarly, the universal inverter is shown in a basic construction only for one phase. For example, the universal inverter 15A shown has only one set of switching device 15-1A, a current sensor 15-2A and an arithmetic unit 15-3A (second arithmetic unit). The switching device 15-1A turns on and off the power from the rectifying circuit RC. The current sensor 15-2A detects an output current value of the switching device 15-1A. The arithmetic unit 15-3A performs addition or subtraction between the detected output current value and a result computed by an arithmetic unit 22 (first arithmetic unit).

The rotating cutters 11A, 11B include position sensors 16, 17 for detecting rotational positions of the respective cutters. A deviation detector 18 detects an angle deviation between the rotating cutters 11A and 11B based on position detected signals from the position sensors 16, 17. The detected angle deviation is given to the arithmetic unit 22 through a compensator 19. When the angle deviation indicates a lag, the angle deviation is added, as a compensating value, to the speed command value given to the universal inverter 15A. When The angle deviation indicates a lead, the angle deviation Is subtracted from the speed command value given to the universal inverter 15A. Similarly, the detected angle deviation is given to an arithmetic unit 23 (first arithmetic unit) through a compensator 20. The compensators 19, 20 perform control to drop the rotational speed of one rotating cutter depending on the angle deviation due to a speed difference between the shafts L and R. Also, the compensators 19, 20 perform control to drop the rotational speed of one rotating cutter and raise the rotational speed of the other depending on the angle deviation due to a speed difference between the shafts L and R. An amplifier with a polarity reversing function is employed as the compensator 19, and an amplifier with no polarity reversing function is employed as the compensator 20.

As is apparent from the construction described above, the present invention is featured in that the two rotating cutters 11A, 11B are both driven by universal motors under control of universal inverters.

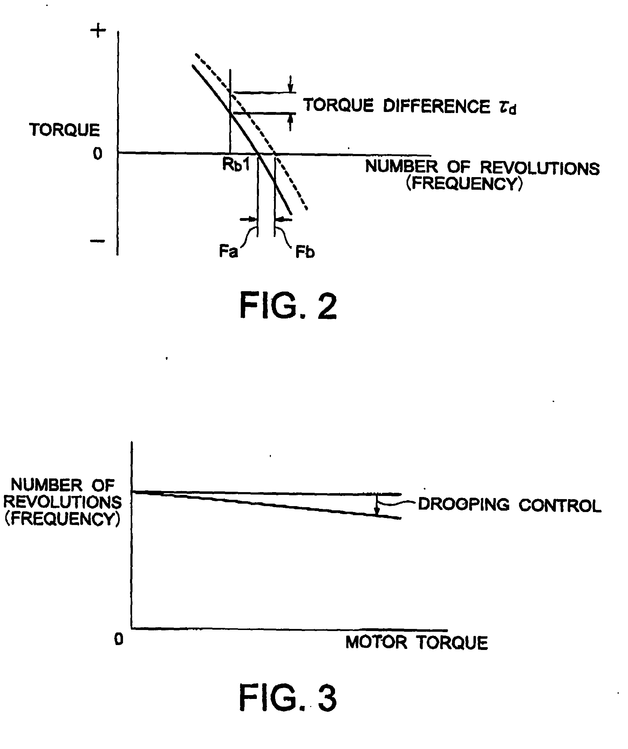

A torque difference due to a difference in frequency applied to motors and a drooping control characteristic will be described with reference to Figs. 2 and 3. Assume in Fig. 2 that two motors Ma, Mb are individually driven and controlled by separate inverters. Also, assume that output shafts of the two motors Ma, Mb are coupled to the same load. In this case, if a difference occurs between output frequencies Fa and Fb from the respective inverters due to, e.g., specific errors of the inverters, the motor rotations run out of synchronous relation. However, because the output shafts of the two motors Ma, Mb are coupled to the same load, the numbers of rotations of the motors are kept the same. In other words, the two motors Ma, Mb are rotated at the number of rotations Rb1, but a difference $\tau_d$ occurs between torques generated by the two motors Ma, Mb.

Referring to Fig. 3, the term "drooping control" means control in which the rotational speed of a motor is gradually reduced as the load of the motor increases. When inputs of different frequencies are given to two motors mechanically coupled with each other, a difference occurs between output torques of the two motors as described above. To effectively utilize the outputs of both the motors in such a case, the output torques of the two motors must be made even to each other. By automatically reducing the frequency, i.e., the number of revolution, of one motor generating a greater torque depending on the magnitude of torque, as shown in Fig. 3, the load can be evenly borne by both the motors.

Such drooping control is realized, as shown In Fig. 1, by detecting an output current value of the switching device 15-1A (15-1B) in each inverter by the current sensor 15-2A (15-2B) and feeding the detected output current value back to the input side of the switching device 15-1A (15-1B).

With the drooping control function described above, the three universal motors for the same rotating cutter bear the load evenly. The drooping control is performed in such a manner as to control the output frequency of a universal inverter for driving a universal motor depending on the load of the universal motor. The drooping control therefore requires no signal from any other universal inverter. Further, by employing a universal inverter with a drooping control function, an external drooping control circuit is no longer needed. It is hence just required to arrange combinations of universal inverters and universal motors in desired number. In the case of performing the drooping control with a universal inverter, a difficulty is encountered in determining a power-running state and a regenerative load, but the difficulty can be overcome by using a recently developed universal inverter with a torque computation/control function.

Using a universal inverter with both a drooping control function and a torque computation/control function enables load balance among a plurality of universal motors to be controlled without speed sensors and external control circuits (control circuits outside the inverter).

The synchronous operation control between the two rotating cutters 11A and 11B is performed as follows. Respective angles of the rotating cutters 11A and 11B are detected by the position sensors 16, 17 attached to the rotating cutters 11A and 11B. The difference between the detected angles is detected as an angle deviation by the deviation detector 18. The universal inverters 15A, 15B perform PI(Proportional Integral) control of the rotating cutters 11A and 11B, respectively, in accordance with the detected angle deviation.

Convertionally as described before, rotating cutters are divided into a main one and remaining subsidiary ones, and the angle deviation compensation is performed only by the subsidiary rotating cutters. In an attempt to achieve load balance for each rotating cutter with drooping control, a drawback may occur with the conventional method in which only the subsidiary rotating cutters perform the angle deviation compensation. The reason is below. If a heavier load is imposed on the subsidiary rotating cutter, the number of revolutions of the subsidiary rotating cutter is reduced under the drooping control. With synchronous operation control between the main rotating cutter and the subsidiary rotating cutter, however, a speed-up command is issued to the subsidiary rotating cutter. This means that the drooping control and the synchronous compensation act in contradictory directions. Consequently, the control takes a time until reaching a stable condition.

By contrast, in this embodiment, the rotating cutters are not divided into main and subsidiary ones. Then, all the rotating cutters are subjected to the angle deviation compensation so as to reduce not only the rotational speed of the universal motor on the heavier load side, but also the rotational speed of the universal motor on the lighter load side. As a result, the synchronous operation control can be achieved.

Even when the same speed command value is given to the three universal inverters for the same rotating cutter, a difference may occur among output frequencies of the universal inverters. This is attributable to the fact that each universal inverter has errors due to an acceleration/deceleration time lag and a scan time lag in addition to a specific A/D conversion error.

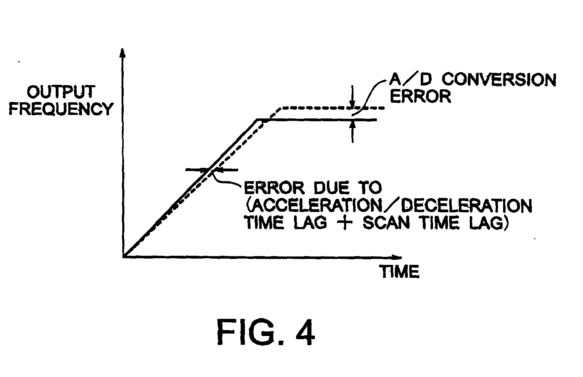

Fig. 4 shows examples of an A/D conversion error and an error due to acceleration/deceleration time lag and a scan time lag in a universal inverter. In Fig. 4, a characteristic Indicated by a solid line represents an ideal output characteristic, and a characteristic indicated by a broken line represents an actual output characteristic.

If differences exist among the output frequencies of the three universal inverters, the loads of the three universal motors are not balanced. As mentioned before, however, because the three universal motors are coupled to the same rotating cutter through the speed reducers and the pinions, those universal motors rotate at the same speed. Accordingly, differences in output frequency due to specific errors of the universal inverters appear as differences in output torque among the universal motors.

The number of revolutions N of a universal motor is expressed by the following formula;

$$N = 120 \cdot F(1 - s) / P$$

where F is a frequency P is the number of poles of the universal motor, and *s* is a slippage.

At the same number of revolutions N, eliminating a difference in frequency F results in the same slippage *s*. Thus, if the three universal motors have the same specifications and rotate at the same number of revolutions with the same slippage, the output torques of the universal motors also have the same value. This means that frequency synchronous control can be employed in the present invention to keep the output frequencies of the universal inverters equal to each other. Stated otherwise, the loads of the three universal motors can be balanced by utilizing a frequency synchronous function to eliminate differences in output among the three universal inverters, causing the inverters to output exactly the same frequency and voltage. As well known, in the frequency synchronous control, a plurality of Inverters are controlled to have the same output frequency so that the numbers of rotations of motors connected respectively to the inverters are coincident with each other.

With the frequency synchronous control, when output shafts of plural universal motors are coupled to the same load, the load can be evenly borne by the universal motors. For a rotating cutter that frequently varies in speed, particularly, universal motors having the frequency synchronous function are preferably employed.

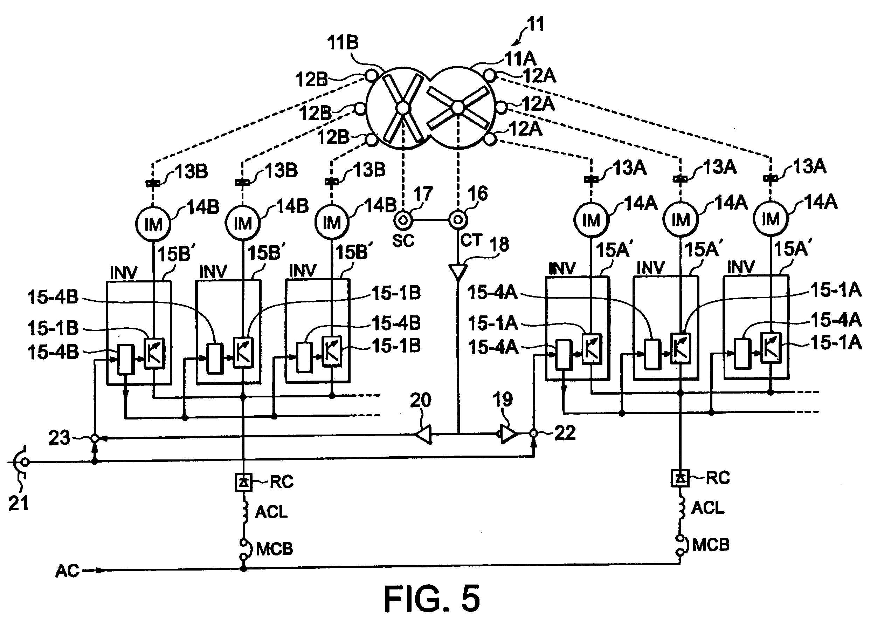

Fig. 5 shows a second embodiment in which three-phase universal inverters 15A', 15B' for carrying out the frequency synchronous control are used instead of the universal inverters 15A, 15B having the drooping control function and shown in Fig. 1. Because the drooping control function is not performed for the universal inverters 15A', 15B', the second embodiment does not require the feedback function effected by the current sensors and the arithmetic units shown in Fig. 1. To synchronize output frequencies of the universal inverters, however, the universal inverters 15A', 15B' include respectively synchronization controllers 15-4A, 15-4B. Looking at a leftmost one of the universal inverters 15A' in Fig. 5, the synchronization controller 15-4A receives an output of the arithmetic unit 22, and produces a control signal to control the switching device 15-1A, thereby controlling the switching device 15-1A. The control signal includes, e.g., frequency information. The control signal is also sent to the synchronization controllers 15-4A in the other two universal inverters 15A'. In the other two universal inverters 15A', the synchronization controllers 15-4A similarly control the switching devices 15-1A in accordance with control signals. The universal inverters 15B' also operate in exactly the same mariner as described above. In the embodiment of Fig. 5, the inverter on the leftmost side In Fig. 5 functions as a master inverter. However, which one of the universal inverters should operate as a master Is a matter of choice in design. Alternatively, the control signal may be transferred among the three synchronization controllers. The construction except the universal inverters 15A', 15B' are exactly the same as shown in Fig. 1. In the rotating cutter synchronous control apparatus of this embodiment, the universal inverters 15A', 15B' perform PI control of rotating cutters 11A and 11B, respectively, in accordance with an angle deviation detected by the position sensors 16, 17 and the deviation detector 18. As a result, synchronous operation control is achieved.

Incidentally, with the frequency synchronous control, the universal motors for the same rotating cutter are all given the same output frequency and run-out of synchronous relation as described above in connection with Fig. 2 does not occur. In the second embodiment, therefore, torque differences among the universal motors hardly occur, and hence the drooping control is not performed. However, the second embodiment requires the universal motors having the same slippage characteristic.

While the above description has been made of a double shield excavator, triple or more shield excavators can also be realized with a similar construction. Also, each rotating cutter may be driven by two or four or more universal motors. Further, a plurality of universal motors for each rotating cutter may be controlled by one universal inverter.

As described above, the present invention eliminates the need of attaching a speed sensor (such as an encoder) to a universal motor. It is therefore possible to reduce the size and increase the ruggedness of the universal motor. In addition, wiring between control panels is simplified (because of omission of cables for detected speed signals), and the size of each control panel itself can be reduced.

**Claims**

1. A cutter synchronous control apparatus for a multiple shield excavator comprising a plurality of rotating cutters (11A,11B), said plurality of rotating cutters being arranged in the same plane such that excavation areas of adjacent rotating cutters partly overlap with each other, each of said rotating cutters being driven by a plurality of motors, which is characterized in that:

said multiple shield excavator includes universal motors (12A,12B) as said plurality of motors; and
said cutter synchronous control apparatus comprises at least one universal inverter (15A,15B) provided for each of said rotating cutters and controlling driving of said plurality of universal motors in accordance with a speed command value;
deviation detecting means (16,17,18) for detecting an angle deviation between the adjacent rotating cutters; and
compensating means (19,20,22,23) for giving said angle deviation, as a speed command compensating value, to the speed command value given to said at least one universal inverter for each rotating cutter.

2. A cutter synchronous control apparatus for a multiple shield excavator according to Claim 1, wherein a universal Inverter having a drooping control function is employed as said at least one universal inverter.

3. A cutter synchronous control apparatus for a multiple shield excavator according to Claim 2, wherein said deviation detecting means includes two position sensors (16,17) for detecting rotational positions of two adjacent rotating cutters, and a deviation detector (18) for detecting a difference between the two rotational positions detected by said two position sensors and outputting the detected difference as said angle deviation.

4. A cutter synchronous control apparatus for a multiple shield excavator according to Claim 3, wherein said compensating means includes an amplifier (19.20) and a first arithmetic unit (22,23) for performing addition or subtraction between an output of said amplifier arid the speed command value.

5. A cutter synchronous control apparatus for a multiple shield excavator according to Claim 4, wherein said universal inverter having the drooping control function includes a switching device (15-1A, 15-1B) for turning on and off power, a current sensor (15-2a,15-2B) for detecting an output current value of said switching device, arid a second arithmetic unit (15-3A,15-3B) for performing addition or subtraction between the detected output current value and an output of said first arithmetic unit.

6. A cutter synchronous control apparatus for a multiple shield excavator according to Claim 1, wherein a universal Inverter (15A',15B') having a frequency synchronous control function is employed as said at least one universal inverter.

7. A cutter synchronous control apparatus for a multiple shield excavator according to Claim 6, wherein said deviation detecting means includes two position sensors (16,17) for detecting rotational positions of two adjacent rotating cutters, and a deviation detector (18) for detecting a difference between the two rotational positions detected by said two position sensors and outputting the detected difference as said angle deviation.

8. A cutter synchronous control apparatus for a multiple shield excavator according to Claim 7, wherein said compensating means includes an amplifier (19,20) and a first arithmetic unit (22,23) for performing addition or subtraction between an output of said amplifier and the speed command value.

9. A cutter synchronous control apparatus for a multiple shield excavator comprising a plurality of rotating cutters (11A, 11B), characterized in that

said multiple shield excavator includes universal motors (12A, 12B); and
said cutter synchronous control apparatus comprises at least one universal inverter (15A, 15B).

FIG. 1

FIG. 2

FIG. 3

OUTPUT
FREQUENCY

A／D CONVERSION
ERROR

ERROR DUE TO
(ACCELERATION／DECELERATION
TIME LAG + SCAN TIME LAG)

TIME

FIG. 4

FIG. 5

EP 1 020 617 A1

European Patent
Office

**EUROPEAN SEARCH REPORT**

Application Number

EP 00 10 0748

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,A | PATENT ABSTRACTS OF JAPAN vol. 1998, no. 04, 31 March 1998 (1998-03-31) & JP 09 324597 A (ISHIKAWAJIMA HARIMA HEAVY IND CO LTD;SUMITOMO HEAVY IND LTD), 16 December 1997 (1997-12-16) * abstract * | 1,9 | E21D9/06 E21D9/08 |
| A | PATENT ABSTRACTS OF JAPAN vol. 015, no. 329 (M-1149), 21 August 1991 (1991-08-21) & JP 03 125794 A (HITACHI CONSTR MACH CO LTD), 29 May 1991 (1991-05-29) * abstract * | 1,9 | |
| A | EP 0 375 837 A (ISHIKAWAJIMA HARIMA HEAVY IND ;HITACHI CONSTRUCTION MACHINERY (JP)) 4 July 1990 (1990-07-04) * the whole document * | 1,9 | |
| A | PATENT ABSTRACTS OF JAPAN vol. 014, no. 119 (M-0945), 6 March 1990 (1990-03-06) & JP 01 315589 A (ISHIKAWAJIMA HARIMA HEAVY IND CO LTD;OTHERS: 04), 20 December 1989 (1989-12-20) * abstract * | 1,9 | TECHNICAL FIELDS SEARCHED (Int.Cl.7) E21D H02P |

The present search report has been drawn up for all claims

| Place of search | Date of completion of the search | Examiner |
|---|---|---|
| THE HAGUE | 6 April 2000 | Fonseca Fernandez, H |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

EP 00 10 0748

This annex lists the patent family members relating to the patent documents cited in the above-mentioned European search report.
The members are as contained in the European Patent Office EDP file on
The European Patent Office is in no way liable for these particulars which are merely given for the purpose of information.

06-04-2000

| Patent document cited in search report | | Publication date | Patent family member(s) | | Publication date |
|---|---|---|---|---|---|
| JP 09324597 | A | 16-12-1997 | NONE | | |
| JP 03125794 | A | 29-05-1991 | JP | 2872708 B | 24-03-1999 |
| EP 0375837 | A | 04-07-1990 | JP | 1315589 A | 20-12-1989 |
| | | | JP | 2562494 B | 11-12-1996 |
| | | | DE | 68919467 D | 05-01-1995 |
| | | | DE | 68919467 T | 29-06-1995 |
| | | | US | 4939431 A | 03-07-1990 |
| JP 01315589 | A | 20-12-1989 | JP | 2562494 B | 11-12-1996 |
| | | | DE | 68919467 D | 05-01-1995 |
| | | | DE | 68919467 T | 29-06-1995 |
| | | | EP | 0375837 A | 04-07-1990 |
| | | | US | 4939431 A | 03-07-1990 |

For more details about this annex : see Official Journal of the European Patent Office, No. 12/82